# EUROPÄISCHE PATENTSCHRIFT

(11) **EP 3 926 206 B1**
(45) Veröffentlichungstag und Bekanntmachung des Hinweises auf die Patenterteilung: **25.12.2024**
(21) Anmeldenummer: 21179833.5
(22) Anmeldetag: 16.06.2021
(51) Int. Cl.: F16G 13/06

(54) **LASCHE EINER BOLZEN-, BUCHSEN- ODER ROLLENKETTE**
LUG OF A PIN, BUSHING OR ROLLER CHAIN
LANGUETTE D'UNE CHAÎNE À ROULEAUX, À MAILLONS PLEINS OU À BOULONS

(30) Priorität: 17.06.2020 DE 102020003601
(43) Veröffentlichungstag der Anmeldung: 22.12.2021
(73) Patentinhaber: Rexnord Kette GmbH, 57518 Betzdorf (DE)
(72) Erfinder: Gerlach, Ulrich, 53840 Troisdorf (DE)
(74) Vertreter: König Szynka Tilmann von Renesse Patentanwälte Partnerschaft mbB Düsseldorf

(56) Entgegenhaltungen:
- DE-U1- 202018 101 379
- US-A1- 2016 348 755

## Beschreibung

Die Erfindung betrifft eine Innenlasche einer Bolzen-, Buchsen- oder Rollenkette, eine Bolzen-, Buchsen- oder Rollenkette, eine Verwendung einer Innenlasche einer Bolzen-, Buchsen- oder Rollenkette sowie ein Verfahren zum Feststellen eines Verschleißes einer Bolzen-, Buchsen- oder Rollenkette.

Für Bolzen-, Buchsen- oder Rollenketten ist es bekannt, dass derartige Ketten im Einsatz verschleißen können. Dies zeigt sich insbesondere dadurch, indem sich die Ketten längen und ab einem bestimmten Maß der Längung als verschlissen betrachtet werden müssen. Der Verschleiß ist im Wesentlichen durch einen abrasiven Verschleiß im Kettengelenk durch Drehbewegung des Kettengelenkes verursacht, welches zu einer Vergrößerung des Gelenkspieles und damit verbunden zu einer Änderung der Kettenlänge führt. Damit verbunden ist eine Änderung der Kettenteilung.

Es sind Messlehren für derartige Ketten bekannt, mit denen der Verschleiß bzw. die Längung der Kette feststellbar ist. Hierzu kann die Messlehre von außen an die Kette angelegt werden und ein Abstand abgelesen und/oder die Messlehre mit einem Fühler in einen Zwischenraum der Kette eingeführt und geprüft werden, ob ein weiterer Fühler ebenfalls in einen weiteren Zwischenraum der Kette eingeführt werden kann.

Obwohl mit den Messlehren, die von außen an derartige Ketten angelegt werden, der Verschleiß der Kette sicher bestimmt werden kann, hat sich herausgestellt, dass es mehrerer Schritte bedarf an, um die mögliche Längung der Kette bzw. den Verschleiß zu ermitteln. Eine Gattungsgemäße Kette mit Innenlaschen nach dem Oberbegriff des Anspruchs 1 ist aus der DE202018101379U bekannt.

Aufgabe ist es, eine einfachere, besser handhabbare und/oder weniger Bauteile aufweisende Möglichkeit zu schaffen, den Verschleiß einer Kette zu erkennen, insbesondere ohne spezielle Mess- oder Prüfvorrichtungen.

Die Aufgabe wird gelöst durch die Gegenstände der unabhängigen Ansprüche. Vorteilhafte Ausführungsformen sind Gegenstand der jeweiligen Unteransprüche und der Beschreibung.

Kerngedanke der Erfindung ist es, an der Kette selbst, das heißt an mindestens einer der Laschen, eine Markierung aufzubringen, die einen Abstand im Sinne einer Längung indiziert. Mittels der Markierung kann erkannt werden, ob die Kette sich über ein bestimmtes Maß, welches beispielsweise unmittelbar durch die Markierung angegeben ist, gelängt hat. Damit kann an mindestens einer der Laschen einer Kette eine Markierung vorgesehen sein, die Rückschluss auf einen Verschleiß bzw. eine Längung der Kette zulässt. Dabei wird vorteilhafterweise eine Markierung verwendet, die eine Beobachtung mit bloßem Auge ermöglicht. Es wurde im Rahmen der Erfindung erstmals erkannt, an einer Lasche der Kette selbst eine Markierung vorzusehen, die einen Abstand indiziert, der für den Verschleiß bzw. eine Längung der Kette wesentlich ist. Dabei kann die Markierung an einer Lasche mit einer (geometrischen) Ausgestaltung mindestens einer weiteren Lasche bei der Beobachtung zusammenwirken. Dem Anwender bzw. Nutzer kann ermöglicht werden, die Markierung im Hinblick auf die Lage und/oder Position einer weiteren benachbarten Lasche in Beziehung zu setzen. Mittels der Markierung kann ein Abstand zwischen zwei Kettengliedern in Bezug auf die Markierung festgestellt werden. Es kann vorgesehen sein, dass die Markierung einen Abstand indiziert bzw. angibt, der im Hinblick auf einen Verschleiß noch tolerabel ist; bis zum Erreichen dieses Abstandes kann die Kette noch verwendet werden. Wird der durch die Markierung indizierte Abstand weiter auf ein Maß größer als die Markierung vergrößert, so muss die Kette ausgetauscht werden.

Die Erfindung schafft eine Innenlasche einer Bolzen-, Buchsen- oder Rollenkette, wobei die Innenlasche zwei Durchgangsöffnungen für jeweils einen Bolzen aufweist und die Durchgangsöffnungen zwischen zwei Grundflächen der Lasche ausgebildet sind. Die Innenlasche weist eine einen Abstand indizierende, auf mindestens eine Grundfläche aufgebrachte Markierung auf.

Im Sinne der Beschreibung umfasst der Begriff "Bolzen-, Buchsen- oder Rollenkette" eine eindimensional bewegliche Kette, die gemeinhin als Gelenkkette oder eindimensional bewegliche Kette bezeichnet wird. Sofern in der Beschreibung eine Bolzen-, Buchsen oder Rollenkette gemeint ist, so wird auch vereinfachend der Begriff "Kette" verwendet

Im Sinne der Beschreibung umfasst der Begriff "Bolzenkette" eine Gelenkkette, bei der sich Laschen auf Bolzen drehen, die vernietet oder versplintet sein können. Bei einer Bolzenkette kann es sich insbesondere um eine Gallkette, Flyerkette oder Zahnkette handeln. Bei einer Flyerkette handelt es sich um eine Gelenkkette, die nur aus Laschen und Bolzen besteht. Derartige Flyerketten können insbesondere als Lastkette bei Kranen und Hebezeugen verwendet werden.

Im Sinne der Beschreibung umfasst der Begriff "Buchsenkette" oder synonym hierfür "Hülsenkette" eine Gelenkkette, bei der innere Laschen auf einer Buchse oder Hülse sitzen, die sich auf dem Bolzen befinden. Die äußeren Laschen sitzen direkt auf dem Bolzen. Durch das Gelenk in Form einer Buchse oder Hülse werden die Reibung und der Verschleiß reduziert.

Im Sinn der Beschreibung umfasst der Begriff "Rollenkette" eine Gelenkkette, bei der innere Laschen auf einer als Hülse bezeichneten Buchse auf dem Bolzen sitzen. Die äußeren Laschen sitzen direkt auf dem Bolzen. Zwischen den inneren Laschen befindet sich eine Rolle auf der Buchse. Die auf der Buchse angeordnete Rolle mindert den Verschleiß der Kette und des Kettenrades.

Die im Rahmen der Beschreibung mittels der Erfindung weitergebildete Innenlasche einer Kette oder die Kette stehen damit im Zusammenhang mit eindimensional beweglichen Ketten, das heißt Gelenkketten mit Laschen und Bolzen, wobei sich die Gelenkketten nach der Art der Verbindung zwischen den Kettengliedern unterscheiden können.

Im Sinne der Beschreibung umfasst der Begriff "Lasche" ein flächiges Materialstück, insbesondere aus Metall, wobei die Lasche mindestens zwei, ganz besonders bevorzugt genau zwei, Durchgangsöffnungen für einen Bolzen oder für eine auch als Hülse bezeichnete Buchse aufweist. Die Durchgangsöffnungen sind zwischen den zwei Grundflächen der Lasche, das heißt der großen Flächen des flächenförmigen Materialstücks, ausgebildet. Die Geometrie in der Lasche ist insbesondere hinsichtlich der Teilung (Abstand der Mittelpunkte der Durchgangsöffnungen einer Lasche für die Bolzen) und des Durchmessers der Durchgangsöffnungen für den Bolzen festgelegt.

Infolge eines Verschleißes kann sich der Abstand der Mittelpunkte der Durchgangsöffnungen einer Lasche vergrößern, indem sich u.a. die Durchgangsöffnungen hinsichtlich ihrer Ausgestaltung vom "Neuzustand" bzw. vom Zustand "bei der Auslieferung" verändern, welches insbesondere mit einer Formänderung einer Durchgangsöffnung mit einer Vergrößerung in Richtung des benachbarten Randbereichs der Lasche geschieht. Die Durchgangsöffnung einer Lasche in einer Kette kann somit in Richtung des benachbarten Kettenglieds größer werden. Mit zunehmender Benutzung der Kette wird die Durchgangsöffnung zum Randbereich der Lasche vergrößert, das heißt der Durchmesser bzw. die Erstreckung der Durchgangsöffnung nimmt längs der Mittellinie der Lasche zu. Infolge dieser Zunahme des Durchmessers längs der Mittelachse der Lasche kommt es zu einem Verschleiß mit einer Längung der Kette, die als Verschleißlängung bezeichnet wird. Üblicherweise werden Gelenkketten nach Erreichen einer festgelegten Verschleißlängung ausgetauscht. Im Allgemeinen gelten Gelencketten mit einer verschleißbedingten Längung von 3 Prozent gegenüber der Nominallänge als so weit verschlissen, dass ein störungsfreier und sicherer Betrieb nicht mehr gewährleistet werden kann. Bei besonderen Anwendungen kann auch eine geringere Längung als zulässige Längung festgelegt sein.

Der Begriff "Markierung" im Sinne der Beschreibung umfasst das Vorsehen mindestens eines Referenzpunktes, der eine makroskopische Ausdehnung aufweist, um mit bloßem Auge erkannt zu werden. Die Markierung kann insbesondere eine Veränderung der Oberfläche der Grundfläche der Lasche sein, die insbesondere nicht lösbar an der Oberfläche der Grundfläche der Lasche ein- und/oder aufgebracht ist. Sofern von einem Ein- oder Aufbringen einer Markierung auf der Grundfläche der Lasche gesprochen wird, so wird hierunter insbesondere verstanden, dass die Oberfläche der Grundfläche selbst verändert bzw. modifiziert werden kann, um die Markierung zu erstellen. Zwar kann eine Markierung auf der Lasche mittels zusätzlichen Materials, insbesondere in Form von Farbe, auf der Oberfläche der Grundfläche aufgebracht werden, aber bevorzugt wird die Markierung mittels einer Veränderung der Oberfläche der Grundfläche der Lasche gegenüber der nicht veränderten Oberfläche der Grundfläche der Lasche gebildet. Eine Markierung kann beispielsweise einen Strich, eine Linie oder eine geschwungene Form aufweisen. Im Sinne der Beschreibung umfasst der Begriff "Markierung" jedwede geometrische Ausgestaltung oder Form. Neben einer punktförmigen Ausgestaltung und einer strichförmigen Ausgestaltung einer Markierung sind auch andere, insbesondere geschlossene, Streckenzüge als Markierung möglich.

Im Sinne der Beschreibung umfasst der Begriff einer "einen Abstand indizierenden" Markierung, dass die Markierung einen Abstand anzeigt, der der Veränderung, der die Kette infolge der Betriebsstunden, der die Kette unterworfen ist, zugeordnet ist, die zu einem (zunehmenden) Abstand zwischen der Lasche, die die Markierung trägt, und einer benachbarten Lasche führt. Die Markierung indiziert einen Abstand, der der Längung der Kette infolge zunehmender Betriebsstunden bezogen auf die Lasche zugeordnet ist, innerhalb derer die Kette noch nicht als "verschlissen" angesehen wird. Mittels der Markierung kann ein Abstand festgelegt und mit bloßem Auge abgelesen werden. Der an der Lasche angezeigte Abstand kann, insbesondere beim Zusammenwirken mit einer benachbarten Lasche, den Verschleiß anzeigen. Die einen Abstand indizierende Markierung kann einen Abstand für eine oder beide der benachbarten Laschen anzeigen, bis zu dessen Erreichen die Kette noch nicht einem solchen Verschleiß unterworfen ist, dass sie ausgetauscht werden müsste. Die Markierung kann somit vorteilhafterweise und insbesondere einen Abstand der Bolzen bzw. einen Abstand der Mittelpunkte der Durchgangsöffnungen bzw. einen Abstand der Mittelpunkte der kreisrunden Durchgangsöffnungen vom Auslieferungszustand bis zu einem Abstand, bei dem die Kette als verschlissen bzw. auszutauschen angenommen wird, indizieren. Insbesondere kann die Markierung einen Abstand bzw. eine Veränderung der Lage eines Bolzens indizieren, der dem Abstand zugeordnet ist, den der Bolzen in der Durchgangsöffnung zwischen dem "Neuzustand" und dem Zustand "Verschlissen" einnimmt. Im Sinne der Beschreibung umfasst der Begriff "Abstand" daher nicht nur einen Abstand, der zwischen zwei Punkten der Markierung "gemessen" werden kann, sondern auch einen Abstand, der sich mit zunehmender Betriebsdauer der Kette infolge des Verschleißes bzw. der Längung der Kette einstellt. Die Markierung kann somit gemäß zweier Alternativen, von denen Mischformen möglich sind, ausgestaltet sein. Beispielsweise kann gemäß einer ersten Alternative die Markierung derart ausgestaltet sein, dass die Markierung einen Referenzpunkt für den Neuzustand umfasst und eine Markierung für den verschlissenen Zustand. Gemäß der zweiten Alternative kann die Markierung (nur) einen Abstand bzw. eine Längung indizieren, ab dem die Kette als verschlissen gilt.

Die einen Abstand indizierende Markierung kann im Wesentlichen zumindest einen Referenzpunkt aufweisen, der auf einen Zustand abstellt, ab dem die Kette als verschlissen bzw. als auszutauschen angesehen werden kann. Der Abstand nimmt auf eine Längung der Kette bezogen auf die Lasche Bezug, ab der die Kette als verschlissen betrachtet werden kann. Die Markierung bezieht sich damit auf einen Zustand, der auf einen Abstand bzw. eine Längung abstellt, der bzw. die gegenüber dem ausgelieferten Neuzustand der Kette derart zugenommen hat, dass die Kette in den Bereich des Endes ihrer Lebenszeit gekommen ist. Der mittels der Markierung indizierte Abstand kann damit im Wesentlichen den Abstand der Bolzen zueinander betreffen, der mit zunehmendem Verschleiß bzw. zunehmender Längung der Kette steigt. Wenn auch mittels der Markierung der Abstand nicht zwingend quantifizierbar ist, so wird durch die Markierung angegeben, dass ein mittels der Markierung festgelegter bzw. vorbestimmter Abstand erreicht worden ist. Die Markierung im Sinne der Beschreibung umfasst damit mindestens einen Referenzpunkt, der im Vergleich zu der Lage eines weiteren Kettenelements der Kette, insbesondere einer weiteren benachbarten Lasche, Rückschlüsse über den Verschleiß bzw. die Längung der Kette ermöglicht.

Die einen Abstand indizierende Markierung umfasst damit im Sinne der Beschreibung mindestens einen Referenzpunkt, der insbesondere mit der Position und/oder Lage der Außenkontur einer weiteren benachbarten Lasche, insbesondere, wenn die Markierung auf einer Innenlasche angebracht ist, die Außenkontur einer Außenlasche, verglichen werden kann. Es kann dabei vorgesehen sein, dass die Markierung gegenüber der Außenkontur der weiteren Lasche derart auf der Lasche angeordnet ist, dass bei einer Längung der Kette bzw. ab einem bestimmten Verschleiß der Kette die Markierung sichtbar wird.

Die Lasche kann eine Markierung für einen Abstand aufweisen, der sich auf einen Bolzen bzw. eine benachbarte Außenlasche beziehen kann. Die Lasche kann aber auch mehr als eine Markierung aufweisen, sodass ein weiterer Abstand sich insbesondere auf einen Abstand für den weiteren Bolzen bzw. die andere benachbarte Außenlasche beziehen kann.

Die die Markierung aufweisende Lasche ist insbesondere als Innenlasche ausgestaltet, die mit der Markierung den Abstand eines Bolzens vom "Neuzustand" zum Zustand "Verschlissen" anzeigt bzw. die Längung der Kette bezogen auf die Innenlasche vom "Neuzustand" zum Zustand "verschlissen". Die als Innenlasche ausgestaltete Lasche mit der Markierung indiziert somit den Abstand, den mindestens eine benachbarte Außenlasche zwischen "Neuzustand" und Zustand "verschlissen" annehmen kann.

Der Begriff "Abstand" ist damit nicht zwingend als ein quantifizierbarer Abstand aus der Markierung in Form einer konkreten Länge zu verstehen - was aber durchaus in Ausführungsformen der Fall sein kann - sondern auch in der Angabe einer für den Betrieb noch tolerierbaren Lage/Position mindestens einer benachbarten Lasche bzw. einer noch tolerierbaren Längung, der bzw. die sich in der Kette mit zunehmenden Betriebsstunden einstellt.

Die Markierung kann zumindest einen Abschnitt aufweisen, der sich längs der Längserstreckung der Lasche erstreckt. Dieser Abschnitt mag in Bezug auf den Abstand, der die Markierung indizieren soll, (zunächst) keine Funktion haben kann jedoch das Ablesen mit bloßem Auge erleichtern, indem der Anwender bzw. Benutzer eine geschlossene Form auf der Lasche erkennen kann, die er auch, wenn die Kette einige Betriebsstunden im Einsatz war, in Gänze erkennen und derart zusammensetzen kann, dass eine Lage und/oder Position einer benachbarten Lasche, insbesondere in Relation zu den Außenpunkten in Längsrichtung der Lasche, die die Referenzpunkte für die Lage der weiteren Lasche sind, mühelos deren Position erkennen kann und mit der Position der weiteren Lasche vergleichen kann. Eine geschlossene Form mit Abschnitten längs der Längserstreckung der Lasche kann somit einen Vorteil bieten. Bei der Markierung, die mindestens einen Abschnitt aufweist, der sich längs der Längserstreckung der Lasche erstrecken kann, kann es sich beispielsweise um eine Kreisform, eine Ellipse, ein (gerundetes) Rechteck oder jede weitere Form handeln, die eine übliche Form, die der Anwender bzw. Benutzer sofort erkennt, aufweist.

Wird die Markierung nur auf einer Grundfläche der Lasche aufgebracht, so ist bei der Montage der Kette darauf zu achten, dass die Markierung für den Benutzer bzw. Anwender nach außen sichtbar ist. Insbesondere bei einer Lasche, bei der nur auf einer Grundfläche eine Markierung aufgebracht ist, so muss bei der Montage der Kette darauf geachtet werden, dass diese Grundfläche mit der Markierung nach außen gedreht wird, um die Markierung von außen sichtbar zu machen. Zur Vereinfachung der Montage kann die Lasche auf beiden Grundflächen eine einen Abstand indizierende Markierung aufweisen, die auf die Grundfläche aufgebracht ist.

In einer bevorzugten Ausführungsform ist die Markierung als Erhebung und/oder Vertiefung auf der Grundfläche ausgestaltet. Insbesondere kann es sich bei der Markierung um eine in die Grundfläche eingebrachte Vertiefung handeln, die beispielsweise mittels Ätzen, Lasern, Fräsen, Drehen, Funkenerodieren, Prägen oder in sonstiger Weise, insbesondere mechanisch, ausgebildet werden kann. Eine Markierung im Sinne der Beschreibung ist bevorzugt eine auf der Grundfläche angeordnete Markierung, die zumindest abschnittsweise eine Erstreckung quer zur Längsachse der Lasche, das heißt im Wesentlichen quer zur Verbindungslinie der Durchgangsöffnungen, aufweist. Die Markierung kann insbesondere strich- oder linienförmig quer zur Längsachse der Lasche ausgebildet sein. Die Markierung kann eine Breite von 1 mm bis 5 mm aufweisen, bevorzugt kann die Breite der Markierung 1 mm bis 4 mm, weiter bevorzugt 2 mm bis 3 mm betragen.

Die Vertiefung kann als Vertiefung in der Grundfläche der Lasche ausgebildet sein. Die Vertiefung kann zumindest abschnittsweise entlang ihrer Erstreckung symmetrisch zu ihrem Grund, das heißt den tiefsten Punkt gegenüber der Grundfläche der Lasche, ausgebildet sein. Eine Asymmetrie bezüglich des Grundes der Vertiefung ist für die Vertiefung zumindest abschnittsweise möglich. Zwar ist auch eine Erhebung, beispielsweise in Form eines gleichen oder vom Material der Lasche unterschiedlichen Materials für die Markierung möglich, bietet aber den Nachteil, dass die Markierung selbst infolge eines Verschleißes abnutzen kann, was ein Ablesen der Markierung bzw. einen Vergleich mit zunehmender Lebensdauer der Kette erschweren kann.

Gerade eine als Vertiefung ausgestaltete Markierung liefert einen erfindungsgemäßen Vorteil, da an der Kette selbst eine den Abstand der Bolzen indizierende Größe angegeben sein kann, ab der ein Verschleiß der Kette nicht mehr hingenommen bzw. toleriert werden kann. Dabei ist eine als Vertiefung ausgestaltete Markierung zunächst für das Anzeigen eines Verschleißes der Kette widersinnig, da eine Vertiefung bisher als die Integrität der Kette schwächende Ausgestaltung angesehen wurde. Es ist der Erfindung zu verdanken, dass eine - gerade als Vertiefung ausgestaltete - Markierung vorgesehen sein kann, um den Verschleiß einer Kette mit dem bloßen Auge sichtbar werden zu lassen, ohne dass es zu einer Schwächung der Kette - die von der Fachwelt bisher angenommen werden konnte - führte. Es wurde erkannt, dass zwar eine als Vertiefung ausgestaltete Markierung eine "Schwächung" des Materials der Lasche bewirken kann, aber die vermeintliche Schwächung einen entscheidenden Vorteil liefert, mit dem insbesondere auf den Verschleiß der Kette bzw. eine über ein vorbestimmtes Maß auftretende Längung der Kettenglieder abgestellt werden kann, der bzw. die noch nicht erreicht ist, solange die Markierung zu erkennen ist und/oder sobald die Markierung erkannt wird.

Eine als Vertiefung ausgestaltete Markierung kann eine Tiefe aufweisen, die geringer ist als 5 mm, bevorzugt geringer als 4 mm, bevorzugt geringer als 3 mm, besonders bevorzugt geringer als 2 mm, insbesondere bevorzugt geringer als 1 mm. Als Vertiefungen ausgebildete Markierungen können eine Tiefe aufweisen, die im Wesentlichen im Bereich von 0,1 mm bis 1 mm, bevorzugt im Bereich von 4 bis 8 Prozent der Laschendicke sein können. Insbesondere ist eine Markierung bevorzugt, die, sofern sie als eine Vertiefung ausgebildet ist, abgerundete Kanten aufweist.

In einer bevorzugten Ausführungsform indiziert die Markierung eine Länge hinsichtlich des Abstands in der Längserstreckung auf der Grundfläche, das heißt in der Richtung, in der die Längung der Kette bzw. der Verschleiß der Kette erwartet wird. Die Markierung kann mindestens zwei Referenzpunkte aufweisen, zwischen denen ein Abstand vorliegt, ab dem die Kette als verschlissen angenommen wird. Die Lasche kann somit eine Markierung haben, die sowohl einen Referenzpunkt für den Neuzustand als auch einen Referenzpunkt für den Verschleiß umfasst. Zwischen den Referenzpunkten kann der Abstand vorgegeben werden, der sich zwischen dem Neuzustand und dem Zustand, der einer verschlissenen Kette zugeordnet ist, einstellt.

In einer bevorzugten Ausführungsform weist die Lasche eine Einschnürung auf und die Markierung weist mindestens zwei Punkte auf gegenüberliegenden Seiten der Einschnürung auf. Hierdurch kann eine Längung bzw. ein Verschleiß hinsichtlich beider Buchsen bzw. beider an der Lasche angelängter weiterer Laschen hinsichtlich des Abstands erkannt werden. An der einen Lasche kann der zunehmende Abstand in Bezug auf die beiden weiteren Laschen, die über die jeweiligen Bolzen an die Lasche angelängt sind, erkannt werden. An ein und derselben Lasche werden die Längungen, die sich in Bezug auf die beiden Bolzen zur Verbindung mit den weiteren Laschen ergeben, berücksichtigt. Die Berücksichtigung beider Bolzen an einer Lasche führt zu einer Verbesserung der Information bzw. zu einer Auswertung aus allen möglichen Informationen, die sich in Bezug auf die Längung an einer Lasche ergeben können.

In einer bevorzugten Ausführungsform bildet die Markierung eine geschlossene geometrische Form, was die Erkennung von Abweichungen bzw. die Erkennung von sich einer sich einstellenden Lage/Position von benachbarten Laschen verbessern kann.

Die Erfindung schafft auch eine Bolzen-, Buchsen- oder Rollenkette mit Innen- und Außenlaschen, wobei mindestens eine Lasche gemäß der Beschreibung ausgestaltet ist und die Markierung nach außen gerichtet ist. Hierdurch kann die Markierung einfach von der Seite der Kette von einem Benutzer bzw. Anwender betrachtet und ein Rückschluss auf den Verschleiß der Kette gezogen werden. Vorzugsweise handelt es sich bei der Lasche der Kette um eine Innenlasche. In einer bevorzugten Ausführungsform weist die Kette mehrere Laschen auf, die eine Markierung im Sinne der Beschreibung aufweisen, sodass der Verschleiß nicht nur an einer Lasche der Kette erkennbar ist, sondern an mehreren. Über das Vorsehen mehrerer Laschen an einer Kette, die eine Markierung aufweisen, kann ein Mittel eines Verschleißes vom Anwender bzw. Benutzer erkannt und nicht nur eine punktuelle Erkenntnis gewonnen werden. Es ist beispielsweise möglich, dass die von außen sichtbaren Innenlaschen der Kette alle eine Markierung aufweisen. Alternativ ist es möglich, dass jede zweite, jede dritte, etc. Innenlasche eine Markierung aufweist. Ein unregelmäßiges Vorsehen von Innenlaschen, die eine Markierung aufweisen, ist ebenfalls möglich.

In einer bevorzugten Ausführungsform der Bolzen-, Buchsen- oder Rollenkette ist die Markierung in Abhängigkeit vom Verschleiß der Bolzen-, Buchsen- oder Rollenkette sichtbar. Hierdurch kann beispielsweise erreicht werden, dass im Auslieferungszustand der Kette die Markierung nicht sichtbar ist und erst dann sichtbar wird, wenn ein Verschleiß der Kette erfolgt ist, der einen Austausch der Kette nahelegt. Die Markierung kann insofern als eine Warnung an den Anwender bzw. Benutzer verstanden werden, bei dem das visuelle Sichtbarwerden einer Markierung infolge der Längung der Kette ein Warnhinweis an den Nutzer bzw. Anwender ist. Die Markierung kann somit quasi als binäre Information verstanden werden, die bei einem visuellen Sichtbarwerden darauf hinweist, dass die Kette auszutauschen ist. Es ist auch möglich, dass die Markierung weitere Strukturen aufweist, die schon im Auslieferungszustand sichtbar sind. Insofern kann die Markierung wie in der Beschreibung beschrieben ist, ausgestaltet sein.

Die Erfindung schafft auch eine Verwendung einer Lasche einer Bolzen-, Buchsen- oder Rollenkette, die zwei Durchgangsöffnungen für jeweils einen Bolzen aufweist, wobei die Durchgangsöffnungen zwischen zwei Grundflächen der Lasche ausgebildet sind. Es wird eine einen Abstand indizierende, auf mindestens eine Grundfläche aufgebrachte Markierung verwendet.

Die Erfindung schafft auch eine - allein eine Erfindung begründende Ausgestaltung - nach der die Markierung für den Zusammenbau der Bolzen-, Buchsen- oder Rollenkette verwendet wird. Die Markierung kann beim Zusammenbau mittels einer Bilderkennungssoftware erkannt werden. Hierdurch kann beim Zuführen der Laschen zur Montageeinheit die Lage der Markierung durch optische Kontrolleinheiten geprüft und falsch zugeführte Laschen aus der Zuführung entfernt werden.

Die Erfindung schafft auch ein Verfahren zum Feststellen eines Verschleißes einer Bolzen-, Buchsen- oder Rollenkette, die Laschen mit zwei Durchgangsöffnungen für jeweils einen Bolzen aufweist. Die Durchgangsöffnungen sind zwischen zwei Grundflächen der Lasche ausgebildet. Es wird mindestens eine der Laschen als eine Lasche bereitgestellt, die eine einen Abstand indizierende, auf mindestens eine Grundfläche aufgebrachte Markierung aufweist. Ein Nutzer bzw. Anwender kann durch die Betrachtung der Markierung einen Verschleiß der Kette feststellen. Dazu kann der Nutzer bzw. Anwender insbesondere die Lage einer weiteren Lasche an der Lasche mit der Markierung in Beziehung zu der Markierung setzen.

Die Beschreibung der einzelnen Aspekte der Erfindung in Form der Lasche, der Bolzen-, Buchsen- oder Rollenkette, der Verwendung einer Lasche und das Verfahren zum Feststellen bzw. Bestimmen eines Verschleißes einer Bolzen-, Buchsen- oder Rollenkette sind als einander ergänzend zu verstehen. Ausführungen in der Beschreibung betreffend einen der Aspekte betreffen auch eine Ausgestaltung in Bezug auf einen anderen der Aspekte. Insbesondere gelten die Ausführungen betreffend die Lasche jeden der anderen Aspekte.

Es ist insbesondere für die Ausgestaltung einer Kette möglich, dass die Markierungen auf den Laschen der Kette unterschiedlich ausgestaltet sein können. Unterschiedliche Markierungen können kombiniert werden. Zur vereinfachten Herstellung einer Kette können die Laschen aber auch alle die gleiche Markierung aufweisen.

Im Sinne der Beschreibung umfasst die Nennung eines Zahlenwertes nicht nur den eigentlichen Zahlenwert, sondern auch - um insbesondere fertigungstechnische Toleranzen zu berücksichtigen - einen Bereich um den konkreten Zahlenwert, der +/-15 %, bevorzugt +/- 10 %, vom angegebenen Zahlenwert sein kann.

Der Begriff "aufweisen" umfasst im Sinne der Beschreibung sowohl den dem Begriff innewohnenden Bedeutungsinhalt, dass weitere Elemente neben den genannten Elementen vorgesehen sein können (nicht abschließende Aufzählung), aber auch den Bedeutungsinhalt, dass der Begriff "aufweisen" synonym für "bestehen aus" bzw. "gebildet aus" verwendet wird.

Im Sinne der Beschreibung umfasst der Begriff "mindestens ein" das Vorsehen genau eines Elements bzw. einer Entität, die dem Begriff "mindestens ein" folgt, wobei aber auch zwei, drei, vier oder entsprechend mehr Elemente bzw. Entitäten vorgesehen sein können. Der Begriff "mindestens ein" schließt nicht aus, aber fordert auch nicht, dass alle Elemente bzw. Entitäten, sofern mehr als eines bzw. eine vorhanden ist, gleich ausgebildet sein müssen.

Die Erfindung wird im Folgenden beispielhaft anhand von in den Figuren dargestellten Ausführungsbeispielen näher erläutert.

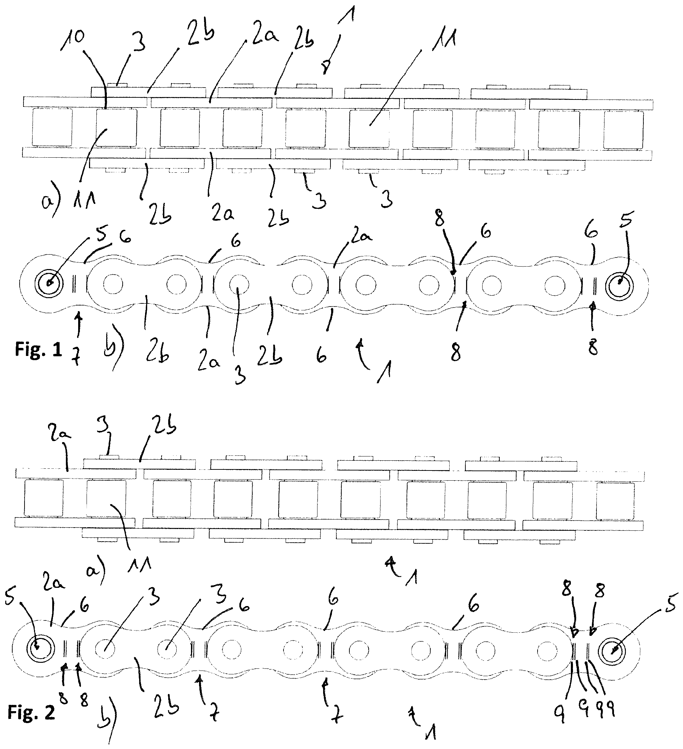

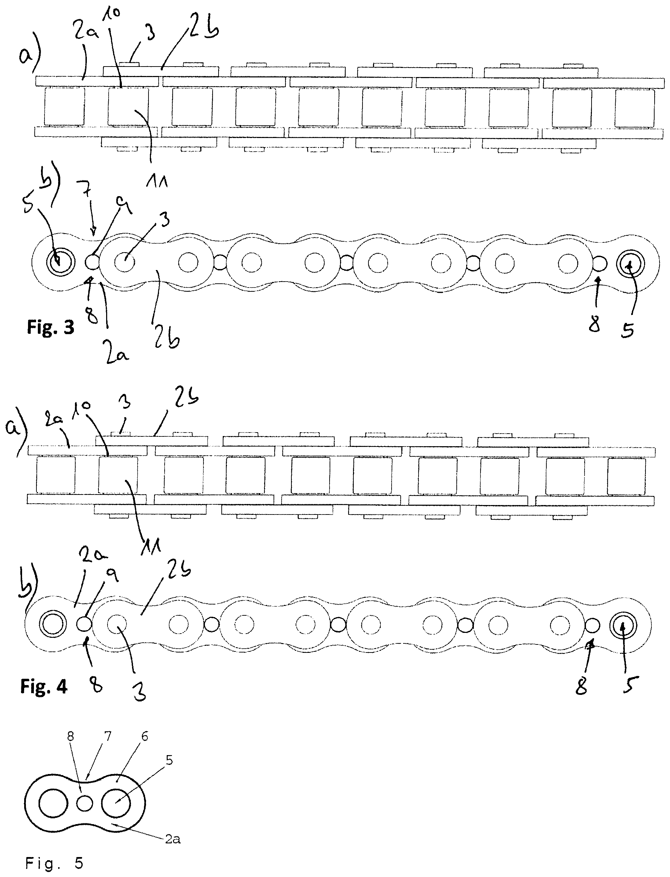

In den Zeichnungen zeigt:
- Fig: 1: eine Gelenkkette in einer Ansicht von oben (Fig. 1a) und in einer Seitenansicht (Fig. 1b) jeweils im Auslieferungszustand;
- Fig: 2: die Gelenkkette gemäß Figur 1 in einer Ansicht von oben (Fig. 2a) und in einer Seitenansicht (Fig. 2b) jeweils im verschlissenen Zustand;
- Fig: 3: eine weitere Ausführungsform einer Gelenkkette in einer Ansicht von oben (Fig. 3a) und in einer Seitenansicht (Fig. 3b) jeweils im Auslieferungszustand;
- Fig: 4: die Gelenkkette gemäß Figur 3 in einer Ansicht von oben (Fig. 4a) und in einer Seitenansicht (Fig. 4b) jeweils in einem verschlissenen Zustand; und
- Fig: 5: eine Lasche einer Gelenkkette in einer Seitenansicht.

Figur 1 zeigt in der mit a) gekennzeichneten Darstellung eine Ansicht von oben eine Gelenkkette 1 mit Laschen 2 und Bolzen 3. Bei den Laschen 2 kann zwischen Innenlaschen 2a und Außenlaschen 2b unterschieden werden.

Bei dem in der Figur 1 dargestellten Ausführungsbeispiel der Gelenkkette 1 ist eine Rollenkette dargestellt. Die Innenlaschen 2a sitzen auf einer Buchse 10 auf dem Bolzen 3. Zwischen den Innenlaschen 2a befindet sich eine Rolle 11 auf der Buchse 10.

Jede der Laschen 2 weist zwei Durchgangsöffnungen 5 zum Durchführen des Bolzens 3 auf. Die Durchgangsöffnungen 5 erstrecken sich zwischen Grundflächen 6 der Laschen 2. Die Durchgangsöffnungen 5 sind voneinander beabstandet in den Laschen 2 angeordnet, wobei zwischen den Bereichen der Lasche 2, in denen sich die Durchgangsöffnung 5 jeweils befindet, eine im Wesentlichen mittige Einschnürung 7 der Lasche 2 vorgesehen ist.

In dem dargestellten Ausführungsbeispiel sind die Innenlaschen 2a geringfügig größer als die Außenlaschen 2b der Gelenkkette 1 ausgebildet.

Die Innenlaschen 2a weisen eine nach außen gerichtete Markierung 8 auf der Grundfläche 6 auf. Im dargestellten Ausführungsbeispiel weist die Markierung 8 vier strichförmig ausgestaltete Vertiefungen 9 auf. Die Vertiefungen 9 sind in die nach außen gerichtete Grundfläche 6 in die Innenlaschen 2a mittels eines Prägestempels eingebracht. Jeweils zwei strichförmige Vertiefungen 9 sind je einer Position einer Außenkontur der zur Innenlasche 2a benachbarten Außenlasche 2b zugeordnet.

Der Figur 1 ist zu entnehmen, dass die Markierung 8 derart in die Innenlasche 2a eingebracht ist, dass jeweils die von der Durchgangsöffnung 5 weiter beabstandete Vertiefung 9 der Position der Außenkontur der Außenlasche 2b zugeordnet ist, die den Zustand der Gelenkkette 1 beschreibt, wie dieser "neu" vorliegt, das heißt im Auslieferungszustand. Die Außenkontur der Außenlasche 2b liegt an der inneren/weiter von der Durchgangsöffnung 5 beabstandeten Vertiefung 9 an.

Aufgrund des Verschleißes der Gelenkkette 1 bzw. einer Längung der Gelenkkette 1 infolge der Belastung während der Betriebsstunden bewegen sich die Durchgangsöffnungen 5 einer Lasche 2 auseinander. Der Abstand der Bolzen 3 in einer Innenlasche 2a nimmt zu, so dass der Abstand der Außenlaschen 2b, die benachbart sind, zunimmt. Dadurch bewegt sich die Außenkontur der Außenlasche 2b von der weiter von der Durchgangsöffnung 5 beabstandeten Vertiefung 9 der Markierung 8 weg in Richtung der der Durchgangsöffnung 5 näherliegenden Vertiefung 9. Dies ist in Figur 2 in der Seitenansicht für die Gelenkkette 1 dargestellt.

Die zunächst der jeweiligen Durchgangsöffnung 5 nähergelegene Vertiefung 9, die in dem Auslieferungszustand in Figur 1 nicht sichtbar war, wird in dem Zustand, in dem sich die Gelenkkette 1 in Figur 2 befindet, sichtbar. Die Gelenkkette 1 hat sich gelängt.

Auch der Figur 2a ist zu entnehmen, dass die Kettenglieder einen größeren Abstand zueinander aufweisen als im in Figur 1 dargestellten Auslieferungszustand. Die Abstände der Vertiefungen 9, die je einer Durchgangsöffnung 5 zugeordnet sind, das heißt auf einer Seite der Einschnürung 7 liegen, entsprechen einem Abstand, das heißt einer Längung pro Kettenglied bzw. einer Hälfte der Längung pro Kettenglied, der die Funktionsfähigkeit der Gelenkkette 1 gefährden kann. Damit zeigt der Abstand zwischen den beiden Vertiefungen 9, die einer Durchgangsöffnung 5 zugeordnet sind, einen Verschleiß der Gelenkkette 1 an, ab dem die Gelenkkette 1 ausgetauscht werden sollte. Durch eine bloße Inaugenscheinnahme der Gelenkkette 1 kann auf den Verschleißzustand der Gelenkkette 1 geschlossen werden.

Die Figuren 3 und 4 zeigen ein weiteres Ausführungsbeispiel einer Gelenkkette 1. Gleiche Elemente der Gelenkkette 1 werden der Einfachheit halber gleich bezeichnet. Im Wesentlichen unterscheidet sich die Gelenkkette 1 im Ausführungsbeispiel der Figuren 3 und 4 vom Ausführungsbeispiel der Figuren 1 und 2 durch die unterschiedliche Form bzw. Art der Markierung 8. Im Ausführungsbeispiel der Figuren 3 und 4 ist die Markierung 8 als kreisförmige Vertiefung 9 ausgebildet.

Im Auslieferungszustand, das heißt im "neuen" Zustand, welcher in Figur 3 dargestellt ist, ist die Markierung 8 nicht vollständig zu sehen. Die zu den Durchgangsöffnungen 5 gerichteten Abschnitte der kreisförmigen Vertiefung 9 werden durch die Außenlaschen 2b überdeckt. Mit steigenden Betriebsstunden längt sich die Gelenkkette 1 und der Abstand zwischen den Außenlaschen 2b nimmt ebenso wie der Abstand zwischen den Durchgangsöffnungen 5 zu, sodass die Markierung 8 in Form der kreisförmigen Vertiefung 9 in Gänze sichtbar wird. Der Durchmesser der kreisförmigen Vertiefung 9 ist dabei so gewählt, dass wenn die Vertiefung 9 bzw. die Markierung 8 in Gänze sichtbar ist, ein Abstand zwischen den Außenlaschen 2b vorliegt, der als verschlissen betrachtet werden kann. Der "verschlissene" Zustand der Gelenkkette 1 ist in Figur 4 gezeigt.

In der Figur 5 ist in einer Ansicht auf die Grundfläche 6 eine Lasche 2a gezeigt, die dem Ausführungsbeispiel der Gelenkkette 1, welches in den Figuren 3 und 4 dargestellt ist, entspricht. Zwischen den Durchgangsöffnungen 5 ist auf der Grundfläche 6 eine als kreisförmige Vertiefung 9 ausgestaltete Markierung 8 eingebracht. Der Außendurchmesser der Vertiefung 9 entspricht dem Abstand, den zwei benachbarte Außenlaschen 2b zueinander haben, wenn die Gelenkkette 1 als verschlissen betrachtet wird. Während die Markierung 8 nicht in Gänze im Auslieferungszustand optisch wahrgenommen werden kann, da die Markierung 8 randseitig von Außenlaschen 2b überdeckt wird, ist Markierung 8 dann vollständig optisch zu erkennen, wenn sich der Abstand der Außenlaschen 2b im verschlissenen Zustand vergrößert hat.

## Patentansprüche

1. Innenlasche (2a) einer Bolzen-, Buchsen- oder Rollenkette, wobei die Innenlasche (2a) zwei Durchgangsöffnungen (5) für jeweils einen Bolzen (3) aufweist und die Durchgangsöffnungen (5) zwischen zwei Grundflächen (6) der Innenlasche (2a) ausgebildet sind, wobei eine einen Abstand indizierende, auf mindestens einer Grundfläche (6) aufgebrachte Markierung (8) vorhanden ist, die mindestens einen Referenzpunkt umfasst, mittels dem die Position und/oder Lage der Außenkontur einer Außenlasche verglichen werden kann, **dadurch gekennzeichnet, dass** die Markierung (8) als Vertiefung auf der Grundfläche (6) ausgestaltet ist und die Markierung (8) eine Linie aufweist.

2. Innenlasche (2a) nach Anspruch 1, **dadurch gekennzeichnet, dass** die Markierung eine Kreisform hat.

3. Innenlasche (2a) nach Anspruch 1oder 2, **dadurch gekennzeichnet, dass** die Markierung (8) einen Abstand in der Längserstreckung der Grundfläche (6) indiziert.

4. Innenlasche (2a) nach einem der Ansprüche 1 bis 3, **dadurch gekennzeichnet, dass** die Innenlasche (2a) eine Einschnürung (7) aufweist und die Markierung (8) mindestens zwei Punkte auf gegenüberliegenden Seiten der Einschnürung (7) aufweist.

5. Innenlasche (2a) nach einem der Ansprüche 1 bis 4, **dadurch gekennzeichnet, dass** die Markierung (8) eine geschlossene geometrische Form bildet.

6. Bolzen-, Buchsen- oder Rollenkette mit Innen- (2a) und Außenlaschen (2b), **gekennzeichnet durch** mindestens eine Innenlasche (2a) nach einem der Ansprüche 1 bis 5, deren Markierung (8) auf der Grundfläche (6) nach außen gerichtet ist.

7. Bolzen-, Buchsen- oder Rollenkette nach Anspruch 6, **dadurch gekennzeichnet, dass** die Markierung (8) in Abhängigkeit vom Verschleiß der Bolzen-, Buchsen- oder Rollenkette sichtbar ist.

8. Verwendung einer Innenlasche (2a) einer Bolzen-, Buchsen- oder Rollenkette, die zwei Durchgangsöffnungen (5) für jeweils einen Bolzen (3) aufweist, wobei die Durchgangsöffnungen (5) zwischen zwei Grundflächen (6) der Innenlasche (2a) ausgebildet sind, wobei eine einen Abstand indizierende, auf mindestens eine Grundfläche (6) aufgebrachte Markierung (8) verwendet wird, die mindestens einen Referenzpunkt umfasst, mittels dem die Position und/oder Lage der Außenkontur einer Außenlasche verglichen werden kann, **dadurch gekennzeichnet, dass** die Markierung (8) als Vertiefung auf der Grundfläche (6) ausgestaltet ist und die Markierung (8) eine Linie aufweist.

9. Verwendung nach Anspruch 8, **dadurch gekennzeichnet, dass** die Markierung (8) für den Zusammenbau der Bolzen-, Buchsen- oder Rollenkette verwendet wird.

10. Verfahren zum Feststellen einer Verschleißes einer Bolzen-, Buchsen- oder Rollenkette, die Innenlaschen (2a) mit zwei Durchgangsöffnungen (5) für jeweils einen Bolzen (3) aufweist und die Durchgangsöffnungen (5) zwischen zwei Grundflächen (6) der Innenlasche (2a) ausgebildet sind, wobei das Verfahren ein Bereitstellen von mindestens einer der Innenlaschen (2a) als eine Innenlasche (2a), die eine einen Abstand indizierende, auf mindestens eine Grundfläche (6) aufgebrachte Markierung (8) aufweist, die mindestens einen Referenzpunkt umfasst, mittels dem die Position und/oder Lage der Außenkontur einer Außenlasche verglichen werden kann, **dadurch gekennzeichnet, dass** eine als Vertiefung ausgestaltete Markierung (8) betrachtet wird, und die Markierung eine Linie aufweist.

## Claims

1. Inner plate (2a) of a pin chain, bush chain or roller chain, wherein the inner plate (2a) has two through-holes (5) for one pin (3) each and the through-holes (5) are formed between two base areas (6) of the inner plate (2a), wherein there is a distance-indicating marker (8) applied to at least one base area (6), which distance-indicating marker comprises at least one reference point by means of which the position and/or location of the outer contour of an outer plate can be compared, **characterised in that** the marker (8) is configured as a depression formed on the base area (6) and the marker (8) has a line.

2. Inner plate (2a) according to claim 1, **characterised in that** the marker has a circular shape.

3. Inner plate (2a) according to claim 1 or 2, **characterised in that** the marker (8) indicates a distance in the longitudinal extension of the base area (6).

4. Inner plate (2a) according to one of claims 1 to 3, **characterised in that** the inner plate (2a) has a necking (7) and the marker (8) has at least two points on opposite sides of the necking (7).

5. Inner plate (2a) according to one of claims 1 to 4, **characterised in that** the marker (8) forms a closed geometric shape.

6. Pin chain, bush chain or roller chain with inner plates (2a) and outer plates (2b), **characterised by** at least one inner plate (2a) according to one of claims 1 to 5, the marker (8) of which is directed outwards on the base area (6).

7. Pin chain, bush chain or roller chain according to claim 6, **characterised in that** the marker (8) is visible depending on the wear of the pin chain, bush chain or roller chain.

8. Use of an inner plate (2a) of a pin chain, bush chain or roller chain, which has two through-holes (5) for one pin (3) each, wherein the through-holes (5) are formed between two base areas (6) of the inner plate (2a), wherein a distance-indicating marker (8) applied to at least one base area (6) is used, which marker comprises at least one reference point, by means of which the position and/or location of the outer contour of an outer plate can be compared, **characterised in that** the marker (8) is configured as a depression formed on the base area (6) and the marker (8) has a line.

9. Use according to claim 8, **characterised in that** the marker (8) is used for the assembly of the pin chain, bush chain or roller chain.

10. Method of establishing wear of a pin chain, bush chain or roller chain which has inner plates (2a) with two through-holes (5) for one pin (3) each, and the through-holes (5) are formed between two base areas (6) of the inner plate (2a), wherein the method comprises providing at least one of the inner plates (2a) as an inner plate (2a) which has a distance-indicating marker (8) applied to at least one base area (6), which marker comprises at least one reference point, by means of which the position and/or location of the outer contour of an outer plate can be compared, **characterised in that** a marker (8) configured as a depression is observed and the marker has a line.

## Revendications

1. Languette intérieure (2a) d'une chaîne à rouleaux, à maillons pleins ou à boulons, la languette intérieure (2a) présentant deux ouvertures de passage (5) pour respectivement un boulon (3) et les ouvertures de passage (5) étant réalisées entre deux surfaces de base (6) de la languette intérieure (2a), un marquage (8) indiquant une distance, appliqué sur au moins une surface de base (6), qui comprend au moins un point de référence, au moyen duquel la position et/ou l'emplacement du contour extérieur d'une languette extérieure peuvent être comparés, **caractérisée en ce que** le marquage (8) est réalisé sous la forme d'un renfoncement sur la surface de base (6) et le marquage (8) présente une ligne.

2. Languette intérieure (2a) selon la revendication 1, **caractérisée en ce que** le marquage a une forme circulaire.

3. Languette intérieure (2a) selon la revendication 1 ou 2, **caractérisée en ce que** le marquage (8) indique une distance dans l'extension longitudinale de la surface de base (6).

4. Languette intérieure (2a) selon l'une des revendications 1 à 3, **caractérisée en ce que** la languette intérieure (2a) comporte un rétrécissement (7) et le marquage (8) comporte au moins deux points sur des côtés opposés du rétrécissement (7).

5. Languette intérieure (2a) selon l'une des revendications 1 à 4, **caractérisée en ce que** le marquage (8) forme une forme géométrique fermée.

6. Chaîne à rouleaux, à maillons pleins ou à boulons comportant des languettes intérieures (2a) et des languettes extérieures (2b), **caractérisée par** au moins une languette intérieure (2a) selon l'une des revendications 1 à 5, dont le marquage (8) sur la surface de base (6) est orienté vers l'extérieur.

7. Chaîne à rouleaux, à maillons pleins ou à boulons selon la revendication 6, **caractérisée en ce que** le marquage (8) est visible en fonction de l'usure de la chaîne à rouleaux, à maillons pleins ou à boulons.

8. Utilisation d'une languette intérieure (2a) d'une chaîne à rouleaux, à maillons pleins ou à boulons, qui présente deux ouvertures de passage (5) pour respectivement un boulon (3), les ouvertures de passage (5) étant formées entre deux surfaces de base (6) de la languette intérieure (2a), un marquage (8) indiquant une distance, appliqué sur au moins une surface de base (6) qui comprend au moins un point de référence, au moyen duquel la position et/ou l'emplacement du contour extérieur d'une languette extérieure peut être comparé, **caractérisée en ce que** le marquage (8) est conçu comme un renfoncement sur la surface de base (6) et le marquage (8) présente une ligne.

9. Utilisation selon la revendication 8, **caractérisée en ce que** le marquage (8) est utilisé pour l'assemblage de la chaîne à rouleaux, à maillons pleins ou à boulons.

10. Procédé pour constater une usure d'une chaîne à rouleaux, à maillons pleins ou à boulons, qui présente des languettes intérieures (2a) avec deux ouvertures de passage (5) pour respectivement un boulon (3) et les ouvertures de passage (5) sont formées entre deux surfaces de base (6) de la languette intérieure (2a), le procédé comprenant une mise à disposition d'au moins une des languettes intérieures (2a) comme languette intérieure (2a), qui présente un marquage (8) indiquant une distance, appliqué sur au moins une surface de base (6), qui comprend au moins un point de référence, au moyen duquel la position et/ou l'emplacement du contour extérieur d'une languette extérieure peuvent être comparés, **caractérisé en ce que** l'on considère un marquage (8) conçu comme un renfoncement, et le marquage présente une ligne.
